# EUROPÄISCHE PATENTSCHRIFT

(11) **EP 4 484 203 B1**
(45) Veröffentlichungstag und Bekanntmachung des Hinweises auf die Patenterteilung: **25.11.2026**
(21) Anmeldenummer: 23181669.5
(22) Anmeldetag: 27.06.2023
(51) Int. Cl.: B60L 1/02, B60L 3/12, B60L 58/12, B60L 58/14, E01C 19/48, B60L 1/00

(54) **EINHEIT UND VERFAHREN ZUM BESTIMMEN EINES ELEKTRISCHEN RESTNUTZUNGSVERMÖGENS EINER ENERGIEVERSORGUNGSQUELLE EINER STRASSENBAUMASCHINE**
UNIT AND METHOD FOR DETERMINING AN ELECTRICAL REMAINING USE CAPACITY OF AN ENERGY SUPPLY SOURCE OF A ROAD CONSTRUCTION MACHINE
UNITÉ ET PROCÉDÉ DE DÉTERMINATION D'UNE CAPACITÉ DE CONSOMMATION RÉSIDUELLE ÉLECTRIQUE D'UNE SOURCE D'ALIMENTATION EN ÉNERGIE D'UN ENGIN DE CONSTRUCTION ROUTIÈRE

(43) Veröffentlichungstag der Anmeldung: 01.01.2025
(73) Patentinhaber: Joseph Vögele AG, 67067 Ludwigshafen (DE)
(72) Erfinder: KOST, Steffen, 67098 Bad Dürkheim (DE); ERDTMANN, Bernhard, 68535 Edingen Neckarthausen (DE)
(74) Vertreter: Grünecker Patent- und Rechtsanwälte PartG mbB

(56) Entgegenhaltungen:
- JP-A- 2008 069 517
- US-A1- 2015 291 036
- US-A1- 2016 375 785
- US-A1- 2023 113 279
- US-A1- 2023 117 372

## Beschreibung

Die vorliegende Erfindung bezieht sich auf eine Einheit oder ein Verfahren zum Bestimmen eines Restnutzungsvermögens mindestens einer mit mindestens einem an einer Straßenbaumaschine eingesetzten, elektrischen Verbraucher verbundenen Energieversorgungsquelle, eine Straßenbaumaschine, aufweisend mindestens eine Einheit zum Bestimmen eines Restnutzungsvermögens oder einen Einbauzug.

### Stand der Technik

Aus dem Stand der Technik sind Verfahren oder Vorrichtungen zum Bestimmen eines Ladezustands einer Energieversorgungsquelle zum Versorgen eines elektrischen Verbrauchers mit Energie bekannt. Üblicherweise wird der Ladezustand als State of Charge (SOC) bestimmt und als Prozentangabe an einen Empfänger ausgegeben. Der Nachteil des Stands der Technik ist, dass der Empfänger anhand der Ladezustandsangabe der Energieversorgungsquelle in Prozent nicht hinlänglich genau erkennen kann, ob der elektrische Verbraucher mit dem Ladezustand der Energieversorgungsquelle ein vorbestimmtes Arbeitsprojekt vollständig durchführen kann.

US 2023 / 117 372 A1 betrifft elektrisch angetriebene Arbeitsmaschinen mit einer Vielzahl von Betriebsmodi einschließlich Modi für das Batterieleistungsmanagement.

US 2023 / 113 279 A1 bezieht sich auf ein System und ein Verfahren zur Steuerung eines Einbaubetriebs.

US 2016 / 375 785 A1 offenbart ein System und ein Verfahren, die als Reaktion auf eine Änderung der Fahrzeugsystemeinstellungen und des Fahrstils Auskunft über eine Reichweite des Elektrofahrzeugs geben.

### Aufgabe

Ausgehend von dem bekannten Stand der Technik besteht die zu lösende technische Aufgabe darin, eine Einheit oder ein Verfahren zum Bestimmen eines Restnutzungsvermögens mindestens einer mit mindestens einem an einer Straßenbaumaschine eingesetzten, elektrischen Verbraucher verbundenen Energieversorgungsquelle, eine Straßenbaumaschine oder einen Einbauzug, aufweisend mindestens eine Einheit zum Bestimmen eines Restnutzungsvermögens anzugeben, die eine einfache und effiziente Bestimmung und Anzeige des Restnutzungsvermögens ermöglichen.

### Lösung

Diese Aufgabe wird erfindungsgemäß durch eine Einheit zum Bestimmen eines Restnutzungsvermögens mindestens einer mit mindestens einem an einer Straßenbaumaschine eingesetzten, elektrischen Verbraucher verbundenen Energieversorgungsquelle gemäß dem Anspruch 1, eine Straßenbaumaschine, aufweisend mindestens eine Einheit zum Bestimmen eines Restnutzungsvermögens gemäß dem Anspruch 6, einen Einbauzug gemäß dem Anspruch 11 oder ein Verfahren zum Bestimmen eines Restnutzungsvermögens mindestens einer mit mindestens einem an einer Straßenbaumaschine eingesetzten, elektrischen Verbraucher verbundenen Energieversorgungsquelle gemäß dem Anspruch 12 gelöst.

Vorteilhafte Weiterbildungen der Erfindung sind in den Unteransprüchen erfasst.

Ein Aspekt der Erfindung betrifft eine Einheit zum Bestimmen eines Restnutzungsvermögens mindestens einer mit mindestens einem an einer Straßenbaumaschine eingesetzten, elektrischen Verbraucher verbundenen Energieversorgungsquelle. Die Einheit ist zum Anzeigen des auf Basis eines aktuellen Ladezustands der Energieversorgungsquelle bestimmten Restnutzungsvermögens als für den mindestens einen Verbraucher verbleibende Restnutzungsdauer, Restnutzungsreichweite und/oder Restnutzungsfläche ausgebildet. Die Bestimmung des Restnutzungsvermögens basiert auf aktuellen Arbeitsbedingungen der Energieversorgungsquelle, insbesondere auf einer aktuellen Arbeitstemperatur der Energieversorgungsquelle und/oder einer gleichmäßigen oder schwankenden Belastung. Die Bestimmung des Restnutzungsvermögens basiert auf einem Vergleich der aktuellen Arbeitsbedingungen der Energieversorgungsquelle mit Soll-Arbeitsbedingungen der Energieversorgungsquelle. Die Einheit ist ferner zum Korrigieren des bestimmten Restnutzungsvermögens basierend auf dem Ergebnis des Vergleichs konfiguriert, um ein korrigiertes, tatsächliches Restnutzungsvermögen zu bestimmen. Dies ermöglicht eine einfache und effiziente Bestimmung und Anzeige des Restnutzungsvermögens der Energieversorgungsquelle. Insbesondere durch das Korrigieren des bestimmten Restnutzungsvermögens kann die Genauigkeit der Bestimmung des Restnutzungsvermögens erhöht werden oder die Bestimmung eines verfälschten Restnutzungsvermögens vermieden werden. Optional kann dadurch eine benutzerfreundliche Anzeige des Restnutzungsvermögens erreicht werden. Im Idealfall kann die Akzeptanz der Einheit bei einem Bediener der Einheit erhöht werden.

Die Straßenbaumaschine kann beispielsweise ein Straßenfertiger, ein Beschicker für einen Straßenfertiger, ein Walzenfahrzeug oder ein Fräsfahrzeug sein. Die Energieversorgungsquelle kann beispielsweise eine Batterie, vorzugsweise eine wiederaufladbare Batterie, sein.

Grundsätzlich kann der Verbraucher ein beliebiger, zur Verwendung der Straßenbaumaschine erforderlicher Verbraucher sein. Der Verbraucher kann an einem Straßenfertiger beispielsweise eine elektrisch betriebene Heizeinrichtung, ein elektrisch betriebenes Elektro-Hydraulikaggregat, eine elektrisch betriebene Längsfördervorrichtung, eine elektrisch betriebene Querfördervorrichtung und/oder ein elektrisch betriebener Fahrwerksantrieb des Straßenfertigers sein. Der Verbraucher kann an einem Beschicker beispielsweise eine elektrisch betriebene Fördereinrichtung für Einbaugut, eine elektrisch betriebene Heizvorrichtung und/oder ein elektrisch betriebener Fahrwerksantrieb des Beschickers sein. Der Verbraucher kann an einem Walzenfahrzeug beispielsweise ein elektrisch betriebener Walzenantrieb und/oder ein elektrisch betriebener Fahrwerksantrieb des Walzenfahrzeugs sein. Der Verbraucher kann an einem Fräsfahrzeug beispielsweise eine elektrisch betriebene Längsfördervorrichtung, ein elektrisch betriebener Fräsenantrieb und/oder ein elektrisch betriebener Fahrwerksantrieb des Fräsfahrzeugs sein.

Die Energieversorgungsquelle kann mit nur einem oder mehreren Verbrauchern zur Energieversorgung verbunden sein. Optional kann der Verbraucher mit nur einer oder mehreren Energieversorgungsquellen zur Energieversorgung verbunden sein. Die Einheit kann dazu ausgebildet sein, zusätzlich zum Restnutzungsvermögen den aktuellen Ladezustand der Energieversorgungsquelle anzuzeigen. Der Ladezustand der Energieversorgungsquelle kann beispielsweise als Prozentangabe, z.B. als State of Charge (SOC), oder als Balkendiagramm angezeigt werden. Die Restnutzungsdauer kann in der Einheit Stunde und/oder Minute und/oder Sekunde bestimmt und angezeigt werden. Die Restnutzungsreichweite kann in der Einheit Kilometer und/oder Meter und/oder Zentimeter bestimmt und angezeigt werden. Die Restnutzungsfläche kann in der Einheit Quadratmeter bestimmt und angezeigt werden. Bei der Bestimmung der Restnutzungsfläche kann beispielsweise eine Soll-Arbeitsbreite einer herzustellenden oder abzutragenden Einbauschicht berücksichtigt werden.

Vorstellbar wäre es, dass die ermittelbare Restnutzungsfläche, insbesondere dann, wenn sie auf einem Straßenfertiger angezeigt wird, sich auf die in Abhängigkeit des Ladezustands der Energieversorgungsquelle noch herstellbare Einbaufläche bezieht. In einem Ausführungsbeispiel, bei welchem die ermittelte Restnutzungsfläche auf einem Walzenfahrzeug anzeigbar ist, kann dadurch insbesondere dem Walzenfahrer die anhand des Ladezustands einer im Walzenfahrzeug verbauten Energieversorgungsquelle noch verdichtbare Einbaufläche, der in Einbaurichtung vor ihm neu verlegten Einbauschicht angezeigt werden.

Die Einheit des Restnutzungsvermögens kann manuell, beispielsweise über eine Benutzerschnittstelle, und/oder automatisch von der Einheit festgelegt und/oder verändert werden. Beispielsweise kann der Bediener der Straßenbaumaschine individuell festlegen, in welcher Einheit die Restnutzungsdauer, die Restnutzungsreichweite und/oder die Restnutzungsfläche angezeigt wird. Der Bediener kann beispielsweise ein Fahrer der Straßenbaumaschine und/oder ein Bohlenbediener der Straßenbaumaschine sein.

Vorzugsweise ist die Einheit zum Anzeigen eines für eine mittels des Verbrauchers geplante Arbeitsmaßnahme benötigten Sollnutzungsvermögens als Sollnutzungsdauer, Sollnutzungsreichweite und/oder Sollnutzungsfläche ausgebildet. Abhängig von der geplanten Arbeitsmaßnahme des Verbrauchers kann ein bestimmtes Sollnutzungsvermögen erforderlich sein, um die Arbeitsmaßnahme erfolgreich oder vollständig durchzuführen. Beispielsweise kann im Rahmen der Arbeitsmaßnahme geplant sein, dass der Verbraucher noch für eine bestimmte Strecke, einen bestimmten Zeitraum und/oder eine bestimmte einzubauende bzw. zu verdichtende Fläche eingesetzt werden soll, um die gewünschte Arbeitsmaßnahme auszuführen. Der Vorteil dieser Ausführungsform besteht darin, dass für den Bediener einfach und zu jedem Zeitpunkt ersichtlich ist, welches Sollnutzungsvermögen benötigt wird, um die Arbeitsmaßnahme durchzuführen. Optional kann eine Abwägung des Bedieners, ob die geplante Arbeitsmaßnahme mit dem Restnutzungsvermögen noch ausführbar ist, erleichtert werden. Im besten Fall kann eine Zuverlässigkeit, dass die Abwägung des Bedieners richtig ist, erhöht werden. Optional kann eine Ablauf- und/oder Ressourcenplanung im Zusammenhang mit der Arbeitsmaßnahme verbessert oder erleichtert werden. Die Sollnutzungsdauer kann in der Einheit Stunde und/oder Minute und/oder Sekunde bestimmt und angezeigt werden. Die Sollnutzungsreichweite kann in der Einheit Kilometer und/oder Meter und/oder Zentimeter bestimmt und angezeigt werden. Die Sollnutzungsfläche kann in der Einheit Quadratmeter bestimmt und angezeigt werden. Die Sollnutzungsfläche kann insbesondere auf Basis einer Soll-Arbeitsbreite und einer Soll-Arbeitslänge einer herzustellenden oder abzutragenden, insbesondere abzufräsenden, Einbauschicht bestimmt werden. Die Einheit des Sollnutzungsvermögens kann manuell, beispielsweise über eine Benutzerschnittstelle, und/oder automatisch festgelegt und/oder verändert werden. Beispielsweise kann ein Bediener der Einheit individuell wählen, in welcher Einheit die Sollnutzungsdauer, Sollnutzungsreichweite und/oder Sollnutzungsfläche angezeigt wird. Dadurch kann die Benutzerfreundlichkeit der Einheit und optional deren Akzeptanz beim Bediener erhöht werden.

Vorzugsweise basiert die Bestimmung des Restnutzungsvermögens auf aktuellen Betriebsbedingungen des elektrischen Verbrauchers, insbesondere einem aktuellen und/oder gemittelten Energiebedarf des elektrischen Verbrauchers. Mittels dieser Ausführungsform kann die Genauigkeit der Bestimmung des Restnutzungsvermögens verbessert werden. Der Energiebedarf kann über eine festgelegte oder variable Zeitspanne hinweg erfasst und gemittelt werden. Die Zeitspanne kann z.B. mindestens ungefähr drei Minuten, vorzugsweise mindestens ungefähr fünf Minuten betragen. Die Zeitspanne kann höchstens ungefähr 20 Minuten, vorzugsweise höchstens ungefähr zehn Minuten betragen. Insbesondere indem der aktuelle Energiebedarf bestimmt wird, kann ein möglicher Defekt des elektrischen Verbrauchers bestimmt werden, der das Restnutzungsvermögen beeinflussen oder reduzieren kann. Die aktuellen Betriebsbedingungen des elektrischen Verbrauchers können von einer aktuellen Betriebstemperatur des Verbrauchers, einer eingestellten Drehzahl eines Verdichtungsaggregats, einer eingestellten Heiztemperatur einer Heizeinrichtung oder einer eingestellten Fördergeschwindigkeit einer Fördereinrichtung der Straßenbaumaschine beeinflusst werden. Die Einheit kann dazu ausgebildet sein, die aktuelle Betriebstemperatur des Verbrauchers mit einem Thermometer, beispielsweise Infrarot-Thermometer oder ein Oberflächenthermometer, zu bestimmen. Ist der Verbraucher beispielsweise aktuell nicht in Betrieb, kann er nicht den aktuellen Ladezustand der Energieversorgungsquelle beeinflussen und kann somit keinen Einfluss auf das zu bestimmende Restnutzungsvermögen haben. Ist der Verbraucher hingegen aktuell in Betrieb, kann er abhängig von seinen aktuellen Betriebsbedingungen einen Teil der Energie der Energieversorgungsquelle nutzen, sodass sich der aktuelle Ladezustand der Energieversorgungsquelle ändern, insbesondere sinken kann. Damit kann der Verbraucher über seine aktuellen Betriebsbedingungen das zu bestimmende Restnutzungsvermögen beeinflussen. Mittels dieser Ausführungsform kann eine Genauigkeit der Bestimmung des Restnutzungsvermögens verbessert werden.

Temperaturen oder Belastungsschwankungen der Energieversorgungsquelle können dazu führen, dass die in der Energieversorgungsquelle gespeicherte Energie nicht optimal genutzt werden kann. Indem die Bestimmung des Restnutzungsvermögens auf aktuellen Arbeitsbedingungen der Energieversorgungsquelle, insbesondere auf einer aktuellen Arbeitstemperatur der Energieversorgungsquelle und/oder einer gleichmäßigen oder schwankenden Belastung, basiert, kann die Genauigkeit der Bestimmung des Restnutzungsvermögens verbessert werden. Die aktuelle Arbeitstemperatur der Energieversorgungsquelle kann beispielsweise mit einem Thermometer, beispielsweise Infrarot-Thermometer oder ein Oberflächenthermometer, erfasst werden. Die Belastung der Energieversorgungsquelle kann durch Strom- und/oder Spannungsspitzen beeinflusst sein. Die Belastung kann gleichmäßig sein, wenn die Strom- und/oder Spannungsspitzen einen für den Verbraucher festgelegten Schwellwert nicht über- und/oder unterschreiten.

Die Bestimmung des Restnutzungsvermögens basiert auf einem Vergleich der aktuellen Arbeitsbedingungen der Energieversorgungsquelle mit Soll-Arbeitsbedingungen der Energieversorgungsquelle. Zusätzlich kann die Bestimmung des Restnutzungsvermögens auf einem Vergleich der aktuellen Betriebsbedingungen des elektrischen Verbrauchers mit Soll-Betriebsbedingungen des elektrischen Verbrauchers basieren. Die Soll-Betriebsbedingungen des Verbrauchers und/oder die Soll-Arbeitsbedingungen der Energieversorgungsquelle können von einem Hersteller des Verbrauchers bzw. der Energieversorgungsquelle, beispielsweise einem Verbraucher- bzw. Energieversorgungsquellendatenblatt, stammen. Die Soll-Betriebsbedingungen des elektrischen Verbrauchers können eine Soll-Drehzahl eines Verdichtungsaggregats, eine Soll-Heiztemperatur einer Heizeinrichtung oder eine Soll-Fördergeschwindigkeit einer Fördereinrichtung der Straßenbaumaschine sein. Die Soll-Arbeitsbedingungen der Energieversorgungsquelle kann eine Soll-Arbeitstemperatur der Energieversorgungsquelle und/oder eine gleichmäßige Belastung der Energieversorgungsquelle sein. Die Soll-Betriebsbedingungen des Verbrauchers und/oder die Soll-Arbeitsbedingungen der Energieversorgungsquelle können Bedingungen angeben, bei denen der Verbraucher bzw. die Energieversorgungsquelle ideal arbeitet. Der Verbraucher kann ideal arbeiten, wenn das durch ihn erzeugte Arbeitsergebnis optimal erreicht wird. Die Energieversorgungsquelle kann ideal arbeiten, wenn ihre Kapazität am größten ist. Es kann gewünscht sein, dass die geplante Arbeitsmaßnahme durchgeführt wird, wenn der Verbraucher und/oder die Energieversorgungsquelle ungefähr ideal arbeitet.

Weichen zumindest temporär die aktuellen Betriebsbedingungen von den Soll-Betriebsbedingungen des elektrischen Verbrauchers ab und/oder weichen zumindest temporär die aktuellen Arbeitsbedingungen von den Soll-Arbeitsbedingungen der Energieversorgungsquelle ab, kann das tatsächliche Restnutzungsvermögen im Vergleich zu dem Restnutzungsvermögen, das bei den Soll-Betriebsbedingungen bzw. Soll-Arbeitsbedingungen bestimmt würde, größer oder kleiner bestimmt sein. Es wäre dabei gemäß einer Variante vorstellbar, dass das tatsächliche Restnutzungsvermögen, welches dem Bediener anzeigbar ist, sich daraus ergibt, dass ein auf Basis von sollwertigen Bedingungen berechnetes Restnutzungsvermögen um einen in Abhängigkeit der von den sollwertigen Bedingungen erfassten Abweichungen bestimmbaren Korrekturwert aktualisiert ist. Mittels dieser Ausführungsform kann sichergestellt werden, dass das Restnutzungsvermögen für den Zustand bestimmt werden kann, in dem der Verbraucher und/oder die Energieversorgungsquelle tatsächlich arbeitet. Im Idealfall kann die Genauigkeit der Bestimmung des Restnutzungsvermögens erhöht werden.

Vorzugsweise weist die Einheit mindestens ein einstellbares Anzeigefeld, beispielsweise ein Display, auf, anhand dessen das Restnutzungsvermögen oder das korrigierte Restnutzungsvermögen darstellbar ist. Dadurch kann dem Bediener auf einfache Weise das Restnutzungsvermögen dargestellt werden. Im Idealfall kann das Restnutzungsvermögen übersichtlich und/oder benutzerfreundliche dargestellt werden. Optional kann die Benutzerschnittstelle zum Festlegen und/oder Verändern der Einheit des Restnutzungsvermögens und/oder des Sollnutzungsvermögens in das Anzeigefeld integriert sein. Das Anzeigefeld kann beispielsweise ein Touchscreen sein. Das Anzeigefeld kann von dem Bediener manuell und/oder von der Einheit automatisch beliebig eingestellt werden. Beispielsweise kann die Einheit des Restnutzungsvermögens und/oder des Sollnutzungsvermögens und/oder das Anzeigefeld hinsichtlich einer Helligkeit bzw. eines Kontrasts des Anzeigefelds und/oder einer Größe der Anzeige auf dem Anzeigefeld und/oder einer Farbe der Anzeige und/oder einer Schriftart einstellbar sein. Die Einheit kann optional eine oder mehrere definierte Einstellungen des Anzeigefelds, zum Beispiel bedienerspezifische Einstellungen, speichern. Dies kann dem Bediener ermöglichen, einfach und schnell eine gespeicherte Einstellung zu wählen. Dadurch kann die Benutzerfreundlichkeit der Einheit und im Idealfall deren Akzeptanz beim Bediener erhöht werden. Optional oder zusätzlich kann das Restnutzungsvermögen akustisch, zum Beispiel über einen Lautsprecher, dargestellt werden.

Vorzugsweise ist die Einheit zum Ausgeben eines Signals konfiguriert, insbesondere wenn das Restnutzungsvermögen oder das korrigierte Restnutzungsvermögen kleiner als ein vorbestimmter Prozentsatz des Sollnutzungsvermögens ist. Der Prozentsatz kann mindestens ungefähr 10 %, vorzugsweise mindestens ungefähr 15 % sein. Der Prozentsatz kann höchstens ungefähr 50 %, vorzugsweise höchstens ungefähr 30 % sein. Das Signal kann visuell und/oder akustisch und/oder taktil sein. Dadurch kann dem Bediener zu einem ausreichend frühen Zeitpunkt angezeigt werden, wenn das Restnutzungsvermögen einen bestimmten Prozentsatz des Sollnutzungsvermögens unterschreitet. Der Bediener kann dann gegebenenfalls eine entsprechende Maßnahme ergreifen. Die Maßnahme kann beispielsweise darin bestehen, dass eine geplante Arbeitsmaßnahme nicht oder nur zum Teil durchgeführt wird. Die Maßnahme kann optional darin bestehen, dass ein oder mehrere weitere Verbraucher, die für die geplante Arbeitsmaßnahme nicht erforderlich, aber mit der Energieversorgungsquelle energetisch verbunden sind, in einen energiesparenden Modus gestellt oder abgeschaltet werden. Im Idealfall kann die Benutzerfreundlichkeit der Einheit und optional deren Akzeptanz beim Bediener erhöht werden.

Denkbar wäre es, dass die Einheit als Sender konfiguriert ist, um zumindest intervallweise oder kontinuierlich ein das Restnutzungsvermögen anzeigendes Signal an einen externen Empfänger zu senden, beispielsweise an eine für einen Ladevorgang der Energieversorgungsquelle und/oder für einen Austausch der Energieversorgungsquelle konfigurierte Station, die insbesondere in Form einer mobilen Einrichtung auf einer Baustelle bereitgestellt ist. Die Einheit kann somit zusammen mit dem Empfänger eine Sende-Empfänger-Einrichtung ausbilden, die im Idealfall für einen unterbrechungsfreien Betrieb der Straßenbaumaschine, insbesondere für einen unterbrechungsfreien Betrieb des Verbrauchers, sorgt.

Die Erfindung betrifft ferner eine Straßenbaumaschine, aufweisend mindestens eine erfindungsgemäße Einheit zum Bestimmen eines Restnutzungsvermögens. Es ergeben sich dieselben Vorteile wie bei der oben genannten Einheit zum Bestimmen des Restnutzungsvermögens. Die Einheit kann mobil oder fest an der Straßenbaumaschine installiert sein. Dadurch kann die Einheit optimal in die Straßenbaumaschine eingebunden sein oder flexibel einsetzbar sein. Die Einheit kann an einem Fahrerbedienstand und/oder Außenbedienstand der Straßenbaumaschine angeordnet sein. Zum Beispiel kann sich ein Fahrer am Fahrerbedienstand und/oder ein Bohlenbediener am Außenbedienstand befinden, der somit einfach auf die Einheit zugreifen kann.

Vorzugsweise ist die Einheit zum Übertragen eines Restnutzungsvermögens oder eines korrigierten Restnutzungsvermögens an mindestens einen entfernten Empfänger konfiguriert. Dazu kann die Einheit drahtlos mit dem Empfänger verbunden sein. Der Empfänger kann zum Beispiel eine entfernte Rechen- und/oder Datenspeichereinheit sein, die das Restnutzungsvermögen über einen bestimmten Zeitraum speichern und/oder auswerten kann. Beispielsweise kann das Restnutzungsvermögen der Energieversorgungsquelle an den Empfänger übertragen werden, um mit der Straßenbaumaschine zusammenhängende Prozesse zu optimieren. Dies bietet zum Beispiel den Vorteil, dass eine oder mehrere geplante Arbeitsmaßnahmen im Zusammenhang mit der Straßenbaumaschine wirtschaftlich oder strategisch vorteilhaft gesteuert werden können.

Denkbar wäre es, dass sich der Verbraucher basierend auf dem gesendeten Restnutzungsvermögen zumindest temporär anhand der externen Recheneinheit in einen Energiesparmodus schalten lässt, um im Idealfall einen unterbrechungsfreien Betrieb sicherzustellen. Hierfür könnte die Einheit als Sende-Empfänger konfiguriert sein, um in Reaktion auf ein das Restnutzungsvermögen anzeigendes, an die Recheneinheit gesendetes Signal von der Recheneinheit ein darauf basierendes Request-Signal zu empfangen, welches die Einheit ggf. dazu veranlasst, den Verbraucher zumindest temporär in den Energiesparmodus zu schalten.

Vorzugsweise ist die Straßenbaumaschine ein Straßenfertiger, ein Beschicker für einen Straßenfertiger, ein Walzenfahrzeug oder ein Fräsfahrzeug. Der Straßenfertiger kann zum Herstellen einer Einbauschicht konfiguriert sein. Der Beschicker kann zum Versorgen des Straßenfertigers mit Einbaumaterial vorgesehen sein. Dadurch kann das Restnutzungsvermögen der Energieversorgungquelle von einem Straßenfertiger oder einem Beschicker einfach und effizient bestimmt und angezeigt werden. Das Fräsfahrzeug kann zum Abtragen, insbesondere Abfräsen, einer alten Einbauschicht konfiguriert sein. Das Walzenfahrzeug kann zum Verdichten der vom Straßenfertiger gefertigten neuen Einbauschicht auf einen vorgegebenen Verdichtungsgrad konfiguriert sein. Zu diesem Zweck kann das Walzenfahrzeug insbesondere wiederholte Walzbewegungen auf der neuen Einbauschicht oder zumindest einem Bereich davon ausführen, bis der vorgegebene Verdichtungsgrad erreicht ist. Insbesondere für das Walzenfahrzeug kann es daher gewünscht sein, das Sollnutzungsvermögen und/oder das Restnutzungsvermögen als Sollnutzungsfläche bzw. als Restnutzungsfläche anzugeben.

Vorzugsweise basiert die Bestimmung des Restnutzungsvermögens auf einer aktuellen Außentemperatur der Straßenbaumaschine und/oder einer aktuellen Fahrgeschwindigkeit der Straßenbaumaschine. Die aktuelle Außentemperatur kann eine Temperatur der Umgebungsluft in der Nähe der Straßenbaumaschine angeben. Die aktuelle Außentemperatur kann beispielsweise mit einem Thermometer an oder in der Nähe der Straßenbaumaschine bestimmt werden. Zweckmäßig wäre es, wenn die Einheit mit einer an der Straßenbaumaschine, insbesondere am Dachaufbau, installierten Wetterstation verbunden ist, um von dieser aktuelle Wetterbedingungen, insbesondere die aktuelle Außentemperatur, übermittelt zu bekommen. Die aktuelle Außentemperatur kann eine aktuelle Arbeitstemperatur der Energieversorgungsquelle und damit die Bestimmung des Restnutzungsvermögens beeinflussen. Die aktuelle Fahrgeschwindigkeit der Straßenbaumaschine kann aktuelle Betriebsbedingungen des elektrischen Verbrauchers, insbesondere einen Energiebedarf des elektrischen Verbrauchers, und damit die Bestimmung des Restnutzungsvermögens beeinflussen. Mittels dieser Ausführungsform kann die Genauigkeit der Bestimmung des Restnutzungsvermögens verbessert werden.

Vorzugsweise ist die Energieversorgungsquelle eine Batterie und/oder der Verbraucher eine elektrisch betriebene Heizeinrichtung und/oder der Verbraucher ein elektrisch betriebenes Elektro-Hydraulikaggregat und/oder der Verbraucher eine elektrisch betriebene Längsfördervorrichtung und/oder der Verbraucher eine elektrisch betriebene Querfördervorrichtung und/oder ein elektrisch betriebener Fahrwerksantrieb der Straßenbaumaschine, insbesondere des Straßenfertigers. Optional kann der Verbraucher eine elektrisch betriebene Fördereinrichtung für Einbaugut, eine elektrisch betriebene Heizvorrichtung und/oder ein elektrisch betriebener Fahrwerksantrieb des Beschickers sein. Optional kann der Verbraucher ein elektrisch betriebener Walzenantrieb und/oder ein elektrisch betriebener Fahrwerksantrieb des Walzenfahrzeugs sein. Optional kann der Verbraucher eine elektrisch betriebene Längsfördervorrichtung, ein elektrisch betriebener Fräsenantrieb und/oder ein elektrisch betriebener Fahrwerksantrieb des Fräsfahrzeugs sein.

Vorstellbar wäre es, dass die Straßenbaumaschine, insbesondere die Einheit zum Bestimmen des Restnutzungsvermögens, mit einer Materiallieferkette funktional, beispielsweise über eine webbasierte Anwendung, verbunden ist, wobei mittels der Straßenbaumaschine in Abhängigkeit des erfassten Restnutzungsvermögens eine Mindesteinbauguttemperatur für das über die Materiallieferkette der Straßenbaumaschine bereitzustellende Einbaugut anforderbar ist. Durch Anlieferung eines heißeren Einbauguts lässt sich der Verbraucher zumindest temporär in einen Energiesparmodus schalten, beispielsweise eine von der Energieversorgungsquelle gespeiste Heizeinrichtung der Straßenbaumaschine, ohne dass dies eine Veränderung des gewünschten Arbeits- bzw. Einbauergebnisses der Straßenbaumaschine hervorrufen würde.

Die Erfindung betrifft ferner einen Einbauzug, umfassend mindestens eine Straßenbaumaschine, insbesondere mindestens einen Beschicker, mindestens einen Straßenfertiger und mindestens ein Walzenfahrzeug, wobei insbesondere ein Restnutzungsvermögen, insbesondere eine Restnutzungsfläche, vom Straßenfertiger und/oder Beschicker an das Walzenfahrzeug übermittelbar ist. Denkbar wäre es, dass ein Restnutzungsvermögen, insbesondere eine Restnutzungsfläche, vom Walzenfahrzeug an den Straßenfertiger und/oder Beschicker übermittelbar ist.

Optional kann der Einbauzug zusätzlich ein erfindungsgemäßes Fräsfahrzeug aufweisen, welches das Restnutzungsvermögen, insbesondere die Restnutzungsfläche, an den Straßenfertiger, Beschicker und/oder das Walzenfahrzeug übermitteln kann. Bei der Bestimmung der Restnutzungsfläche kann eine Soll-Arbeitsbreite einer abzutragenden Einbauschicht berücksichtigt werden.

Grundsätzlich kann das Restnutzungsvermögen zwischen den Komponenten des Einbauzugs, d.h. dem Straßenfertiger, Beschicker, Walzenfahrzeug und optional Fräsfahrzeug, beliebig übermittelbar und insbesondere vergleichbar sein. Damit wird erreicht, dass die jeweiligen Teilnehmer des Einbauzugs untereinander über jeweilige Energiereserven informiert sind, insbesondere deren Betrieb sich in Abhängigkeit davon anpassen lässt. Beispielsweise wäre es denkbar, dass ein Walzenfahrzeugfahrer in Kenntnis darüber, dass ein im Einbauzug in Einbaurichtung vorausfahrender Straßenfertiger mit einem geringen Energiespeicherladezustand arbeitet, seine Walzleistung, insbesondere seine Walzgeschwindigkeit, reduziert.

Das Restnutzungsvermögen derjenigen Straßenbaumaschine im Einbauzug, das am kleinsten ist, kann bei der Steuerung des Einbauzugs, sprich für einen aufeinander abgestimmten Betrieb der im Einbauzug arbeitenden Straßenbaumaschinen, berücksichtigt werden. Beispielsweise können die Restnutzungsvermögen aller Straßenbaumaschinen des Einbauzugs miteinander verglichen werden, wobei darauf beispielsweise sich jeweilige Verbraucher der Straßenbaumaschinen in deren Betrieb aufeinander abstimmen lassen.

Die Erfindung betrifft ferner ein Verfahren zum Bestimmen eines Restnutzungsvermögens mindestens einer mit mindestens einem an einer Straßenbaumaschine eingesetzten, elektrischen Verbraucher verbundenen Energieversorgungsquelle. Bei dem Verfahren wird auf Basis eines erfassten, aktuellen Ladezustands der Energieversorgungsquelle ein Restnutzungsvermögen als für den mindestens einen Verbraucher verbleibende Restnutzungsdauer, Restnutzungsreichweite und/oder Restnutzungsfläche angezeigt. Die Bestimmung des Restnutzungsvermögens basiert auf aktuellen Arbeitsbedingungen der Energieversorgungsquelle, insbesondere auf einer aktuellen Arbeitstemperatur der Energieversorgungsquelle und/oder einer gleichmäßigen oder schwankenden Belastung. Die Bestimmung des Restnutzungsvermögens basiert auf einem Vergleich der aktuellen Arbeitsbedingungen der Energieversorgungsquelle mit den Soll-Arbeitsbedingungen der Energieversorgungsquelle. Das bestimmte Restnutzungsvermögen wird basierend auf dem Ergebnis des Vergleichs korrigiert, um ein korrigiertes Restnutzungsvermögen zu bestimmen.

Vorzugsweise wird mittels der Einheit ein für eine mittels des Verbrauchers geplante Arbeitsmaßnahme benötigtes Sollnutzungsvermögen als Sollnutzungsdauer, Sollnutzungsreichweite und/oder Sollnutzungsfläche angezeigt. Es ergeben sich dieselben Vorteile wie bei der oben genannten Einheit zum Bestimmen eines Restnutzungsvermögens oder der Straßenbaumaschine, aufweisend mindestens eine Einheit zum Bestimmen eines Restnutzungsvermögens.

Im Hinblick auf einen der Aspekte (Einheit, Straßenbaumaschine oder Verfahren) beschriebenen Merkmale oder Erläuterungen können auf die anderen Aspekte übertragen und mit diesen kombiniert werden.

Im Folgenden wird die Erfindung anhand von Ausführungsformen genauer erläutert. Es zeigen:
- Figur 1: eine schematische Darstellung einer Straßenbaumaschine in Form eines Straßenfertigers mit einer Einheit zum Bestimmen eines Restnutzungsvermögens gemäß einer Ausführungsform,
- Figur 2: eine schematische Darstellung einer Straßenbaumaschine in Form eines Beschickers für einen Straßenfertiger mit einer Einheit zum Bestimmen eines Restnutzungsvermögens gemäß einer Ausführungsform,
- Figur 3: eine Perspektivansicht eines Bereichs des Straßenfertigers aus Figur 1 gemäß einer Ausführungsform,
- Figur 4: eine schematische Ansicht eines Anzeigefelds einer Einheit zum Bestimmen eines Restnutzungsvermögens mindestens einer mit mindestens einem an einer Straßenbaumaschine eingesetzten, elektrischen Verbraucher verbundenen Energieversorgungsquelle gemäß einer Ausführungsform und
- Figur 5: eine schematische Ansicht eines Anzeigefelds einer Einheit zum Bestimmen eines Restnutzungsvermögens mindestens einer mit mindestens einem an einer Straßenbaumaschine eingesetzten, elektrischen Verbraucher verbundenen Energieversorgungsquelle gemäß einer weiteren Ausführungsform.

Gleiche technische Komponenten sind in den Figuren durchgängig mit denselben Bezugszeichen versehen.

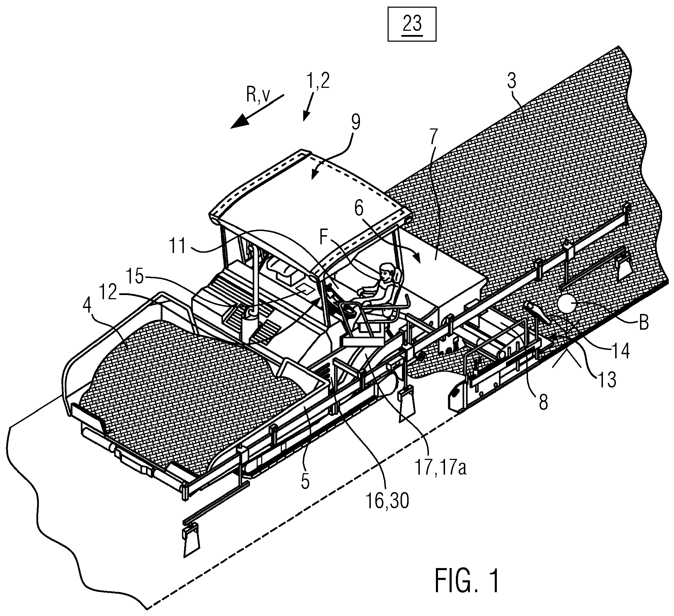

Figur 1 zeigt eine schematische Darstellung einer Straßenbaumaschine 1, die als Straßenfertiger 2 zum Herstellen einer neuen Einbauschicht 3 mit einer Soll-Einbaubreite bzw. mit einer Soll-Arbeitsbreite und einer Soll-Arbeitslänge konfiguriert ist. Der Straßenfertiger 2 stellt die neue Einbauschicht 3 in Fahrtrichtung R mit einer Einbaugeschwindigkeit v von ungefähr 10 m/min her. Dafür setzt der Straßenfertiger 2 Einbaumaterial 4 ein, welches in einem vorne an ihm ausgebildeten Gutbunker 5 bevorratet ist. Aus dem Gutbunker 5 wird das darin bevorratete Einbaumaterial 4 mittels einer Längsfördervorrichtung 30 entgegen der Fahrtrichtung R zu einer Einbaubohle 6 transportiert, die dazu ausgebildet ist, das ihr vorgelegte Einbaumaterial 4 zur neuen Einbauschicht 3 zu verdichten.

Die in Figur 1 gezeigte Einbaubohle 6 ist als Ausziehbohle konfiguriert. Die Einbaubohle 6 verfügt über eine Grundbohle 7 und seitliche Ausziehteile 8 zum Einstellen einer gewünschten Einbaubreite der neuen Einbauschicht 3.

Der Straßenfertiger 2 aus Figur 1 umfasst einen Fahrerbedienstand 9 für einen Fahrer F. Auf dem Fahrerbedienstand 9 des Straßenfertigers 2 ist für den Fahrer F ein Bedienpult 12 vorgesehen. Das Bedienpult 12 ist zum Steuern und Überwachen von mittels des Straßenfertigers 2 durchführbaren Prozessen konfiguriert. Beispielsweise kann der Fahrer F am Bedienpult 12 die Geschwindigkeit v des Straßenfertigers 2 in Fahrtrichtung R einstellen.

Ferner zeigt Figur 1 einen Außenbedienstand 13, der außen an der Einbaubohle 6 einen Arbeitsplatz für einen Bohlenbediener B schafft, um daran Prozesse des Straßenfertigers 2, insbesondere der Einbaubohle 6 zu steuern und zu überwachen. Dafür ist am Außenbedienstand 13 ein weiteres Bedienpult 14 vorgesehen.

Der Straßenfertiger 2 weist weiterhin eine Batterie 17a als Energieversorgungsquelle 17 auf, die mit der Längsfördervorrichtung 30 als elektrischer Verbraucher 16 verbunden ist, um diese mit Energie zu versorgen.

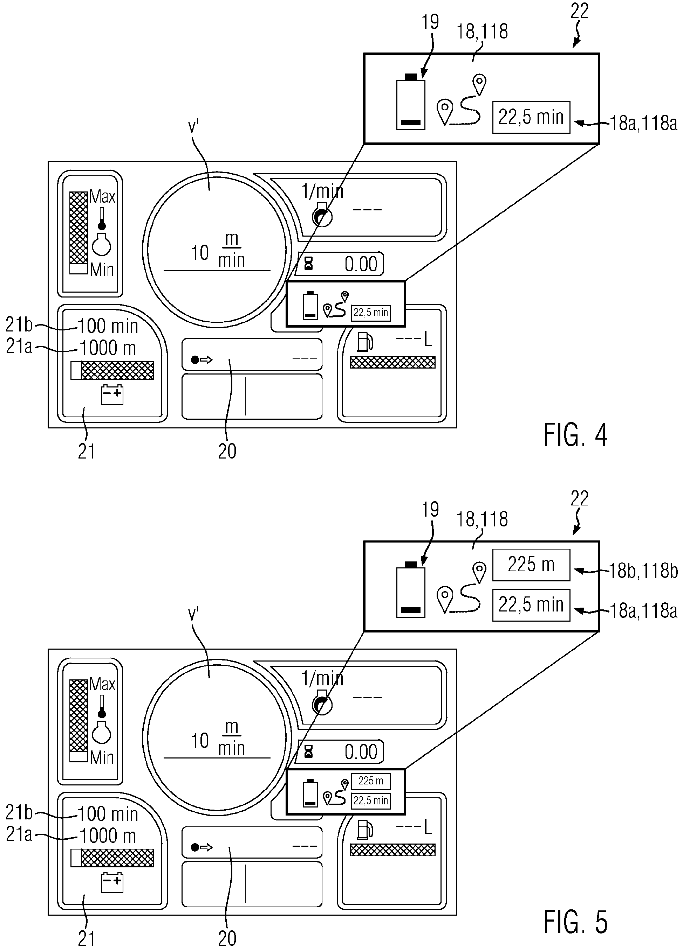

Figur 1 zeigt ferner eine Einheit 15 zum Bestimmen eines Restnutzungsvermögens 18 (siehe Figur 4) der Batterie 17a, die im Folgenden genauer erläutert wird. Die Einheit 15 ist vorzugsweise als mobile Einheit an dem Fahrerbedienstand 9 angeordnet, sodass der Fahrer F die Einheit 15 bei Bedarf von dem Straßenfertiger 2 entfernen kann. Beispielsweise ist die Einheit 15 Teil einer zum Steuern und Überwachen der am Straßenfertiger 2 ablaufenden Prozesse konfigurierten Bedieneinheit.

Die Einheit 15 ist ferner zum, vorzugsweise drahtlosen, Übertragen des Restnutzungsvermögens 18 an mindestens einen entfernten Empfänger 23 konfiguriert. Dazu ist die Einheit 15 als Sender konfiguriert, um vorzugsweise zumindest intervallweise ein das Restnutzungsvermögen 18 anzeigendes Signal an den externen Empfänger 23 zu senden. Gemäß diesem Ausführungsbeispiel ist der externe Empfänger 23 als eine für einen Ladevorgang der Batterie 17a konfigurierte Station, insbesondere als eine mobile Lade-Einrichtung, in der Umgebung des Straßenfertigers 2 bereitgestellt. Die Einheit 15 bildet somit zusammen mit dem Empfänger 23 eine Sende-Empfänger-Einrichtung, die im Idealfall für einen unterbrechungsfreien Betrieb des Straßenfertigers 2, insbesondere für einen unterbrechungsfreien Betrieb der Längsfördervorrichtung 30, sorgt.

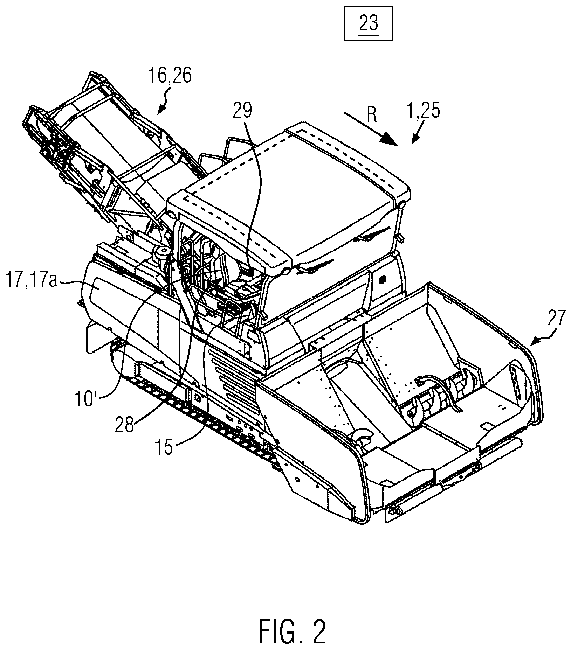

Figur 2 zeigt eine weitere Straßenbaumaschine 1, die in Form eines Beschickers 25 für einen Straßenfertiger 2 konfiguriert ist. Ein solcher Beschicker 25 wird in der Praxis dafür eingesetzt, einen Straßenfertiger 2 gemäß Figur 1 mit Einbaumaterial 4 zu versorgen. Dafür fährt der Beschicker 25 in Fahrtrichtung R vor dem Straßenfertiger 2 und wirft mittels einer am Beschicker 25 ausgebildeten Fördereinrichtung 26 Einbaumaterial 4 in den Gutbunker 5 des ihm hinterherfahrenden Straßenfertigers 2. Der Beschicker 25 aus Figur 2 verfügt über einen Gutbunker 27 zur Aufnahme von Einbaumaterial 4. Die Fördereinrichtung 26 reicht bis zum Gutbunker 27 und kann somit das darin bevorratete Einbaumaterial 4 aus diesem heraus, entgegen der Fahrtrichtung R in Richtung des nachfolgenden Straßenfertigers 2 transportieren und diesem übergeben.

Gemäß Figur 2 verfügt der Beschicker 25 über einen Fahrerbedienstand 28. Auf dem Fahrerbedienstand 28 ist eine Sitzkonsole 10' für den Fahrer F' und ein Bedienpult 29 zum Steuern und Überwachen der vom Beschicker 25 durchgeführten Prozesse gelagert.

Der Beschicker 25 weist weiterhin eine Batterie 17a als Energieversorgungsquelle 17 auf, die mit der Fördereinrichtung 26 als elektrischer Verbraucher 16 verbunden ist, um diese mit Energie zu versorgen.

Figur 2 zeigt ferner eine Einheit 15 zum Bestimmen eines nicht dargestellten Restnutzungsvermögens 18 der Batterie 17a, die im Folgenden genauer erläutert wird. Die Einheit 15 ist vorzugsweise als mobile Einheit an dem Fahrerbedienstand 28 angeordnet, sodass der Fahrer F' die Einheit 15 bei Bedarf von dem Beschicker 25 entfernen kann.

Die Einheit 15 ist ferner zum, vorzugsweise drahtlosen, Übertragen des Restnutzungsvermögens 18 an mindestens einen entfernten Empfänger 23 konfiguriert. Dazu ist die Einheit 15 als Sender konfiguriert, um vorzugsweise zumindest intervallweise ein das Restnutzungsvermögen 18 anzeigendes Signal an den externen Empfänger 23 zu senden. Gemäß diesem Ausführungsbeispiel ist der externe Empfänger 23 als eine für einen Ladevorgang der Batterie 17a konfigurierte Station als eine mobile Einrichtung in der Umgebung des Beschickers 25 bereitgestellt. Die Einheit 15 bildet somit zusammen mit dem Empfänger 23 eine Sende-Empfänger-Einrichtung aus, die im Idealfall für einen unterbrechungsfreien Betrieb des Beschickers 25, insbesondere für einen unterbrechungsfreien Betrieb der Fördereinrichtung 26, sorgt.

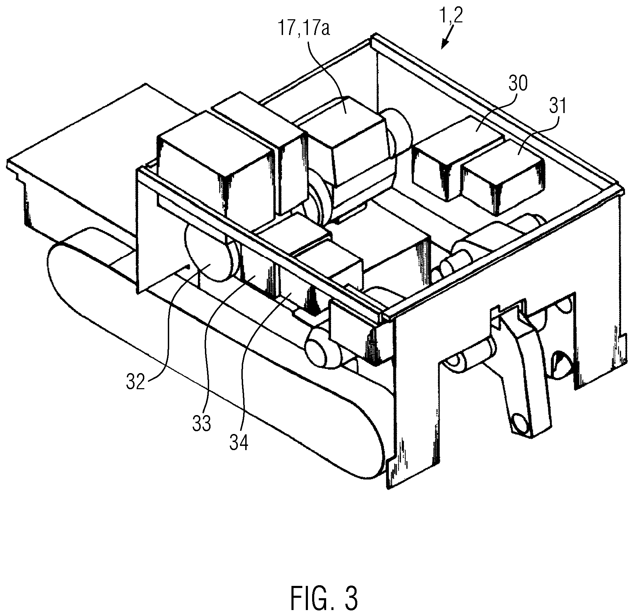

Figur 3 zeigt eine Perspektivansicht einer Zugmaschine des Straßenfertigers 2 aus Figur 1 gemäß einer Ausführungsform. Aus Figur 3 ist im Detail erkennbar, dass in dem Straßenfertiger 2 die Batterie 17a als Energieversorgungsquelle 17 eingebaut ist. Die Batterie 17a kann insbesondere als Wechselmodul vorliegen. An geeigneten Stellen sind mindestens ein elektrischer Verbraucher 16, insbesondere die elektrisch betriebene Längsfördervorrichtung 30, eine elektrisch betriebene Heizeinrichtung 31, ein elektrisch betriebenes Elektro-Hydraulikaggregat 32, eine elektrisch betriebene Querfördervorrichtung 33 und/oder ein elektrisch betriebener Fahrwerksantrieb 34 des Straßenfertigers 2 vorgesehen. Die Energieversorgungsquelle 17 kann des Weiteren nicht gezeigte, andere, in der geschleppten Einbaubohle 7 integrierte elektrische Verbraucher, beispielsweise eine Heizeinrichtung, mit Strom versorgen.

Im vorliegenden Ausführungsbeispiel nach Figur 3 sind alle Verbraucher 16 mit der Batterie 17a energetisch verbunden. Es ist aber auch denkbar, nur einen oder ausgewählte Verbraucher 16 elektrisch über die Batterie 17a anzutreiben. Optional ist auch denkbar, mehrere Energieversorgungsquellen 17 vorzusehen, die je mit nur einem oder mehreren Verbrauchern 16 verbunden sind. Es ist weiterhin denkbar, dass ein oder mehrere Verbraucher 16 mit mehr als einer Energieversorgungsquelle 17 verbunden ist.

Figur 3 verdeutlicht beispielsweise die Anordnung wichtiger elektrischer Verbraucher 16 und deren energetische Verbindung mit der Batterie 17a. Die Angaben zu der Art, Anzahl und Anordnung der Energieversorgungsquelle 17 und der elektrischen Verbraucher 16 sind lediglich beispielhaft gewählt und schränken den Schutzbereich nicht ein. Für den Fachmann ist ersichtlich, dass für einen Beschicker 25 als Straßenbaumaschine 1 der Verbraucher 16 neben der elektrisch betriebenen Fördereinrichtung 26 für das Einbaugut 4 auch eine andere elektrisch betriebene Vorrichtung sein kann, zum Beispiel eine elektrisch betriebene Heizvorrichtung oder ein elektrisch betriebener Fahrwerksantrieb des Beschickers 24. Optional kann die Straßenbaumaschine 1 ein Walzenfahrzeug 35 oder ein Fräsfahrzeug 36 sein. Der Verbraucher 16 kann dann ein elektrisch betriebener Walzenantrieb und/oder ein elektrisch betriebener Fahrwerksantrieb des Walzenfahrzeugs 35, eine elektrisch betriebene Längsfördervorrichtung, ein elektrisch betriebener Fräsenantrieb und/oder ein elektrisch betriebener Fahrwerksantrieb des Fräsfahrzeugs 36 sein.

Die Figuren 4 und 5 zeigen je ein Anzeigefeld 22 der Einheit 15 für eine Straßenbaumaschine 1 gemäß unterschiedlichen Ausführungsformen. In dem Ausführungsbeispiel ist das Anzeigefeld 22 an dem Straßenfertiger 2 vorgesehen. Für den Fachmann ist ersichtlich, dass das Anzeigefeld 22 ebenso an dem Beschicker 25 vorgesehen sein kann.

Die Einheit 15 bestimmt einen aktuellen Ladezustand 19 der Batterie 17a als State of Charge (SOC) von ungefähr 15 % und zeigt diesen im Anzeigefeld 22 in Form eines Balkendiagramms an. Diese Angabe des Ladezustands 19 in Prozent kann unter Umständen nicht geeignet sein, damit der Fahrer F abschätzen kann, wie weit oder wie lange die Längsfördervorrichtung 30 und/oder ein anderer elektrischer Verbraucher 16 noch mit der Batterie 17a betrieben werden kann. Insbesondere ist es für den Fahrer F nicht möglich, festzustellen, ob die in der Energieversorgungsquelle 17 gespeicherte, vorrätige Energie angesichts des laufenden Betriebs zur Vollendung einer vorbestimmten Arbeitsmaßnahme 20, beispielsweise zum Einbauen von 50 Tonnen Einbaugut mit dem aktuellen Energieverbrauch, ausreichend ist.

Die Längsfördervorrichtung 30 wird hier rein exemplarisch als Verbraucher 16 berücksichtigt. Wie gesagt kann der Verbraucher 16 optional einer oder mehrere der in Figur 3 dargestellten Verbraucher 16 sein. Beispielsweise kann der Verbraucher 16 eine elektrisch betriebene Heizeinrichtung 31, ein elektrisch betriebenes Elektro-Hydraulikaggregat 32, eine elektrisch betriebene Querfördervorrichtung 33 und/oder ein elektrisch betriebener Fahrwerksantrieb 34 des Straßenfertigers 2 sein. Die Angaben zum Verbraucher 16 sind nur beispielhaft gewählt und schränken den Schutzbereich nicht ein.

Im Ausführungsbeispiel kann beispielsweise geplant sein, dass der Straßenfertiger 2 eine neue Einbauschicht 3 mit einer Länge von ungefähr 1000 m herstellen soll. Eine geplante Arbeitsmaßnahme 20 besteht demnach zum Beispiel darin, dass die Batterie 17a die elektrisch betriebene Längsfördervorrichtung 30 derart antreiben soll, dass die geplante, neue Einbauschicht 3 hergestellt werden kann. Entsprechend dieser Arbeitsmaßnahme 20 kann ein Sollnutzungsvermögen 21 der Batterie 17a in Form einer Sollnutzungsreichweite 21a ungefähr 1000 m betragen und/oder in Form einer Sollnutzungsdauer 21b ungefähr 100 min betragen. Die Einheit 15 ist dazu ausgebildet, die geplante Arbeitsmaßnahme 20 und/oder das Sollnutzungsvermögen 21 im Anzeigefeld 22 darzustellen. Ferner ist die Einheit 15 zum Bestimmen eines Restnutzungsvermögens 18 der mit der Längsfördervorrichtung 30 verbundenen Batterie 17a zum Anzeigen, ob das Sollnutzungsvermögen 21 damit erreichbar ist, ausgebildet. Die Einheit 15 ist weiterhin zum Anzeigen des auf Basis des aktuellen Ladezustands 19 der Batterie 17a bestimmten Restnutzungsvermögens 18 als für die Längsfördervorrichtung 30 verbleibende Restnutzungsdauer 18a, Restnutzungsreichweite 18b ausgebildet. Des Weiteren kann die Einheit 15 zum Bestimmen und/oder Anzeigen einer Restnutzungsfläche 18c und/oder einer Sollnutzungsfläche 21c ausgebildet sein kann.

Für das Bestimmen des Restnutzungsvermögens 18 berücksichtigt die Einheit 15 aktuelle Betriebsbedingungen der Längsfördervorrichtung 30, insbesondere deren gemittelten Energieverbrauch, der von der eingestellten Fördergeschwindigkeit der Längsfördervorrichtung 30 beeinflusst wird. Der Energiebedarf der Längsfördervorrichtung 30 wird dazu über einen Zeitraum von ungefähr zehn Minuten gemittelt und ergibt für eine Fördergeschwindigkeit v' von ungefähr 10 m/min etwa 150 kWh. Zudem basiert die Bestimmung des Restnutzungsvermögens 18 auf aktuellen Arbeitsbedingungen der Batterie 17a, insbesondere deren aktueller Arbeitstemperatur, die mit einem Infrarot-Thermometer zu ungefähr 18 °C bestimmt wird. Basierend auf diesen Angaben bestimmt die Einheit 15 ein Restnutzungsvermögen 18 als eine Restnutzungsdauer 18a von ungefähr 25 Minuten bzw. eine Restnutzungsreichweite 18b von ungefähr 250 m. Um die Genauigkeit des bestimmten Restnutzungsvermögens 18 zu erhöhen, vergleicht die Einheit 15 die aktuellen Betriebsbedingungen der Batterie 17a mit Soll-Betriebsbedingungen der Batterie 17a und die aktuellen Arbeitsbedingungen der Längsfördervorrichtung 30 mit Soll-Arbeitsbedingungen der Längsfördervorrichtung 30. Als Soll-Betriebsbedingungen der Batterie 17a bzw. als Soll-Arbeitsbedingungen der Längsfördervorrichtung 30 sind in einem Verbraucher- bzw. Energieversorgungsquellendatenblatt zum Beispiel bei einer Fördergeschwindigkeit von ungefähr 10 m/min ein Energieverbrauch von ungefähr 100 kWh hinterlegt und eine Arbeitstemperatur der Batterie 17a von ungefähr 20 °C hinterlegt. Die Einheit bestimmt folglich eine Abweichung von ungefähr zehn Prozent. Basierend auf diesem Ergebnis korrigiert die Einheit 15 das Restnutzungsvermögen 18, sodass sich eine korrigierte Restnutzungsdauer 118a von ungefähr 22,5 Minuten bzw. eine korrigierte Restnutzungsreichweite 118b von ungefähr 225 m ergibt. Somit beträgt das korrigierte Restnutzungsvermögen 118 der Batterie 17a ungefähr 22,5 % des Sollnutzungsvermögens 21.

In Figur 4 zeigt das Anzeigefeld 22 nur die Restnutzungsdauer 18a bzw. die korrigierte Restnutzungsdauer 118a von ungefähr 22,5 Minuten als Restnutzungsvermögen 18 bzw. als korrigiertes Restnutzungsvermögen 118. Die Einheit 15 ist ferner derart konfiguriert, dass sie ein akustisches Signal über einen im Fahrerbedienstand 9 angeordneten, nicht dargestellten Lautsprecher ausgibt, wenn das korrigierte Restnutzungsvermögen 118 der Batterie 17a kleiner als 30 % des Sollnutzungsvermögens 21 ist. Im Ausführungsbeispiel gibt die Einheit 15 daher ein Signal als Warnung aus. Der Fahrer F kann eine entsprechende Maßnahme ergreifen, beispielsweise die geplante Arbeitsmaßnahme nicht durchzuführen.

In Figur 5 zeigt das Anzeigefeld 22 der Einheit 15 den aktuellen Ladezustand 19 der Batterie 17a von 15 % als Balkendiagramm an. Zudem zeigt das Anzeigefeld 22 die entsprechende korrigierte Restnutzungsdauer 118a von ungefähr 22,5 min an. Wie gesagt, ist für die geplante Arbeitsmaßnahme 20 ein Sollnutzungsvermögen 21 der Batterie 17a in Form einer Sollnutzungsreichweite 21a ungefähr 1000 m erforderlich. Der Fahrer F kann anhand der angezeigten korrigierten Restnutzungsdauer 118a nicht ohne Weiteres abschätzen, ob die Batterie 17a die Längsfördervorrichtung 30 noch mit genug Energie versorgen kann, um diese Arbeitsmaßnahme 20 durchzuführen. Daher ist das Anzeigefeld 22 mittels einer nicht dargestellten Benutzerschnittstelle zum Festlegen und/oder Verändern einer Einheit der Anzeige des korrigierten Restnutzungsvermögens 118 in das Anzeigefeld 22 steuerbar. Das Anzeigefeld 22 ist zu diesem Zweck als Touchscreen ausgebildet. Der Fahrer F kann einfach den Touchscreen mit den Fingern bedienen, so dass das Anzeigefeld 22 zusätzlich zu der korrigierten Restnutzungsdauer 118a von 22,5 min die korrigierte Restnutzungsreichweite 118b der Batterie 17a von 225 m anzeigt. Optional ist es auch möglich, das Anzeigefeld 22 so einzustellen, dass entweder die Restnutzungsreichweite 18b bzw. die korrigierte Restnutzungsreichweite 118b oder die Restnutzungsdauer 18a bzw. die korrigierte Restnutzungsdauer 118a angezeigt wird. Für den Fahrer F ist schnell und einfach ersichtlich, dass die korrigierte Restnutzungsreichweite 118b von 225 m der Batterie 17a nicht mehr ausreicht, um die geplante Arbeitsmaßnahme 20 durchzuführen.

## Patentansprüche

1. Straßenbaumaschine (1), die in Form eines Straßenfertigers (2) oder eines Beschickers (24) für einen Straßenfertiger (2) konfiguriert ist, wobei die Straßenbaumaschine (1) umfasst:
- eine Energieversorgungsquelle (17), wobei die Energieversorgungsquelle (17) eine Batterie (17a) ist,
- einen Fahrerbedienstand (9, 28),
- eine an dem Fahrerbedienstand angeordnete Einheit, die zum Bestimmen eines Restnutzungsvermögens (18) der mit mindestens einem an der Straßenbaumaschine (1) eingesetzten, elektrischen Verbraucher (16) verbundenen Energieversorgungsquelle (17) ausgebildet ist,
**dadurch gekennzeichnet, dass** die Einheit (15) zum Anzeigen des auf Basis eines aktuellen Ladezustands (19) der Energieversorgungsquelle (17) bestimmten Restnutzungsvermögens (18) als für den mindestens einen Verbraucher (16) verbleibende Restnutzungsdauer (18a) und/oder Restnutzungsreichweite (18b) ausgebildet ist, wobei die Einheit (15) zum Anzeigen eines für eine mittels des Verbrauchers (16) geplante Arbeitsmaßnahme (20) benötigten Sollnutzungsvermögens (21) als Sollnutzungsdauer (21a) und/oder Sollnutzungsreichweite (21b) ausgebildet ist.

2. Straßenbaumaschine (1) nach Anspruch 1, **dadurch gekennzeichnet, dass** die Bestimmung des Restnutzungsvermögens (18) auf aktuellen Betriebsbedingungen des elektrischen Verbrauchers (16), insbesondere einem aktuellen und/oder gemittelten Energiebedarf des elektrischen Verbrauchers (16), basiert.

3. Straßenbaumaschine (1) nach Anspruch 1 oder 2, **dadurch gekennzeichnet, dass** die Bestimmung des Restnutzungsvermögens (18) auf aktuellen Arbeitsbedingungen der Energieversorgungsquelle (17), insbesondere auf einer aktuellen Arbeitstemperatur der Energieversorgungsquelle (17) und/oder einer gleichmäßigen oder schwankenden Belastung, basiert.

4. Straßenbaumaschine (1) nach Anspruch 2 oder 3, **dadurch gekennzeichnet, dass** die Bestimmung des Restnutzungsvermögens (18) auf einem Vergleich der aktuellen Betriebsbedingungen des elektrischen Verbrauchers (16) mit Soll-Betriebsbedingungen des elektrischen Verbrauchers (16) und/oder den aktuellen Arbeitsbedingungen der Energieversorgungsquelle (17) mit den Soll-Arbeitsbedingungen der Energieversorgungsquelle (17) basiert.

5. Straßenbaumaschine (1) nach Anspruch 4, **dadurch gekennzeichnet, dass** die Einheit (15) zum Korrigieren des bestimmten Restnutzungsvermögens (18) basierend auf dem Ergebnis des Vergleichs konfiguriert ist, um ein korrigiertes Restnutzungsvermögen (118) zu bestimmen.

6. Straßenbaumaschine (1) nach einem der vorangehenden Ansprüche, **dadurch gekennzeichnet, dass** die Einheit (15) mindestens ein einstellbares Anzeigefeld (22) aufweist, anhand dessen das Restnutzungsvermögen (18) oder das korrigierte Restnutzungsvermögen (118) darstellbar ist, und/oder die Einheit (15) zum Ausgeben eines Signals konfiguriert ist, insbesondere wenn das Restnutzungsvermögen (18) oder das korrigierte Restnutzungsvermögen (118) kleiner als ein vorbestimmter Prozentsatz des Sollnutzungsvermögens (21) ist.

7. Straßenbaumaschine (1) nach einem der vorangehenden Ansprüche, **dadurch gekennzeichnet, dass** die Einheit (15) zum Übertragen des Restnutzungsvermögens (18) oder des korrigierten Restnutzungsvermögens (118) an mindestens einen entfernten Empfänger (23) konfiguriert ist.

8. Straßenbaumaschine (1) nach einem der vorangehenden Ansprüche, **dadurch gekennzeichnet, dass** die Bestimmung des Restnutzungsvermögens (18) auf einer aktuellen Außentemperatur der Straßenbaumaschine (1) und/oder einer aktuellen Fahrgeschwindigkeit der Straßenbaumaschine (1) basiert.

9. Straßenbaumaschine (1) nach einem der vorangehenden Ansprüche, **dadurch gekennzeichnet, dass** der Verbraucher eine elektrisch betriebene Heizeinrichtung (31) und/oder ein elektrisch betriebenes Elektro-Hydraulikaggregat (32) und/oder eine elektrisch betriebene Längsfördervorrichtung (30) und/oder eine elektrisch betriebene Querfördervorrichtung (33) und/oder ein elektrisch betriebener Fahrwerksantrieb (34) der Straßenbaumaschine ist.

10. Verfahren zum Bestimmen und Anzeigen eines Restnutzungsvermögens (18) mindestens einer mit mindestens einem an einer Straßenbaumaschine (1) eingesetzten, elektrischen Verbraucher (16) verbundenen Energieversorgungsquelle (17),
wobei die Straßenbaumaschine (1) in Form eines Straßenfertigers (2) oder eines Beschickers (24) für einen Straßenfertiger (2) konfiguriert ist,
wobei die Energieversorgungsquelle (17) eine Batterie (17a) ist,
wobei die Straßenbaumaschine (1) einen Fahrerbedienstand (9, 28) umfasst, an dem mindestens eine Einheit (15) angeordnet ist,
**dadurch gekennzeichnet, dass** die Einheit (15) auf Basis eines erfassten, aktuellen Ladezustands der Energieversorgungsquelle (17) ein Restnutzungsvermögen (18) als für den mindestens einen Verbraucher (16) verbleibende Restnutzungsdauer (18a) und/oder Restnutzungsreichweite (18b) bestimmt und anzeigt ,
wobei mittels der Einheit (15) ein für eine mittels des Verbrauchers (16) geplante Arbeitsmaßnahme (20) benötigtes Sollnutzungsvermögen (21) als Sollnutzungsdauer (21a) und/oder Sollnutzungsreichweite (21b) angezeigt wird.

## Claims

1. Road construction machine (1), the road construction machine (1) is a road paver (2) or a feeder (24) for a road paver (2), the road construction machine (1) comprises:
an energy supply source 17, wherein the energy supply source (17) is a battery (17a), a driver's control station (9, 28), and a unit (15) being arranged at the driver's control station (9, 28) configured for determining a remaining utilization capacity (18) of the energy supply source (17) connected to at least one electrical consumer (16) used on the road construction machine (1) **characterized in that**
the unit (15) is adapted for indicating the remaining utilization capacity (18) determined on the basis of a current charging state (19) of the energy supply source (17) as a remaining utilization duration (18a) and/or a remaining utilization range (18b) for the at least one consumer (16), wherein the unit (15) is adapted for indicating a target utilization capacity (21) required for a planned work measure (20) by means of the consumer (16) as target utilization duration (21a) and/or target utilization range (21b).

2. Road construction machine according to claim 1,
**characterized in that**
the determination of the remaining utilization capacity (18) is based on current operating conditions of the electrical consumer (16), in particular a current and/or averaged energy demand of the electrical consumer (16).

3. Road construction machine according to claim 1 or 2,
**characterized in that**
the determination of the remaining utilization capacity (18) is based on current working conditions of the energy supply source (17), in particular on a current working temperature of the energy supply source (17) and/or a uniform or fluctuating load.

4. Road construction machine according to claim 2 or 3,
**characterized in that**
the determination of the remaining utilization capacity (18) is based on a comparison of the current operating conditions of the electrical consumer (16) with target operating conditions of the electrical consumer (16) and/or the current working conditions of the energy supply source (17) with the target working conditions of the energy supply source (17).

5. Road construction machine according to claim 4,
**characterized in that**
the unit (15) is configured for correcting the determined remaining utilization capacity (18) based on the result of the comparison to determine a corrected remaining utilization capacity (118).

6. Road construction machine according to one of the preceding claims,
**characterized in that**
the unit (15) has at least one adjustable display field (22), by means of which the remaining utilization capacity (18) or the corrected remaining utilization capacity (118) may be displayed, and/or the unit (15) is configured to output a signal, in particular if the remaining utilization capacity (18) or the corrected remaining utilization capacity (118) is less than a predetermined percentage of the target utilization capacity (21).

7. Road construction machine according to one of the preceding claims,
**characterized in that**
the unit (15) is configured for transmitting the remaining utilization capacity (18) or the corrected remaining utilization capacity (118) to at least one remote receiver (23).

8. Road construction machine according to one of the preceding claims,
**characterized in that**
the determination of the remaining utilization capacity (18) is based on a current outside temperature of the road construction machine (1) and/or a current driving speed of the road construction machine (1).

9. Road construction machine according to one of the preceding claims,
**characterized in that**
the consumer is an electrically operated heating device (31) and/or is an electrically operated electro-hydraulic unit (32) and/or is an electrically operated longitudinal conveyor device (30) and/or is an electrically operated transverse conveyor device (33) and/or an electrically operated undercarriage drive (34) of the road construction machine.

10. Method for determining and indicating a remaining utilization capacity (18) of at least one energy supply source (17) connected to at least one electrical consumer (16) used on a road construction machine (1), wherein the road construction machine (1) is a road paver (2) or a feeder (24) for a road paver (2), wherein the energy supply source (17) is a battery (17a), and wherein the road construction machine (1) comprises a driver's control station (9, 28), where a unit (15) is arranged,
**characterized in that**
the unit (15) determines and indicates a remaining utilization capacity (18) as a remaining utilization duration (18a) and/or a remaining utilization range (18b) for the at least one consumer (16) on the basis of a detected, current charging state of the energy supply source (17), wherein by means of the unit (15), a target utilization capacity (21) required for a planned work measure (20) by means of the consumer (16) is indicated as target utilization duration (21a) and/or target utilization range (21b).

## Revendications

1. Engin de construction routière (1) configuré sous la forme d'un finisseur routier (2) ou d'un alimentateur (24) destiné à un finisseur routier (2), dans lequel l'engin de construction routière (1) comprend :
- une source d'alimentation en énergie (17), dans lequel la source d'alimentation en énergie (17) est une batterie (17a), et
- un poste de conduite (9, 28),
- une unité agencée au niveau du poste de conduite et conçue pour déterminer une capacité d'utilisation résiduelle (18) de la source d'alimentation en énergie (17) reliée à au moins un consommateur électrique (16) utilisé au niveau de l'engin de construction routière (1),
**caractérisé en ce que** l'unité (15) est conçue pour afficher, sous la forme d'une durée d'utilisation résiduelle (18a) et/ou d'une plage d'utilisation résiduelle (18b) pour le au moins un consommateur (16), la capacité d'utilisation résiduelle (18) déterminée sur la base d'un état de charge actuel (19) de la source d'alimentation en énergie (17), dans lequel l'unité (15) est conçue pour afficher, sous la forme d'une durée d'utilisation cible (21a) et/ou d'une plage d'utilisation cible (21b), une capacité d'utilisation cible (21) requise pour une phase de travail (20) prévue au moyen du consommateur (16)

2. Engin de construction routière (1) selon la revendication 1**, caractérisé en ce que** la détermination de la capacité d'utilisation résiduelle (18) est basée sur des conditions de fonctionnement actuelles du consommateur électrique (16), en particulier sur une demande d'énergie actuelle et/ou moyenne du consommateur électrique (16).

3. Engin de construction routière (1) selon la revendication 1 ou 2**, caractérisé en ce que** la détermination de la capacité d'utilisation résiduelle (18) est basée sur des conditions de travail actuelles de la source d'alimentation en énergie (17), en particulier sur une température de travail actuelle de la source d'alimentation en énergie (17) et/ou sur une charge uniforme ou fluctuante.

4. Engin de construction routière (1) selon la revendication 2 ou 3**, caractérisé en ce que** la détermination de la capacité d'utilisation résiduelle (18) est basée sur une comparaison entre les conditions de fonctionnement actuelles du consommateur électrique (16) et les conditions de fonctionnement cibles du consommateur électrique (16) et/ou entre les conditions de travail actuelles de la source d'alimentation en énergie (17) et les conditions de travail cibles de la source d'alimentation en énergie (17).

5. Engin de construction routière (1) selon la revendication 4**, caractérisé en ce que** l'unité (15) est configurée pour, en se basant sur le résultat de ladite comparaison, corriger la capacité d'utilisation résiduelle (18) déterminée afin de déterminer une capacité d'utilisation résiduelle corrigée (118).

6. Engin de construction routière (1) selon l'une quelconque des revendications précédente**s, caractérisé en ce que** l'unité (15) présente au moins un champ d'affichage (22) pouvant être ajusté, à l'aide duquel la capacité d'utilisation résiduelle (18) ou la capacité d'utilisation résiduelle corrigée (118) peut être représentée, et/ou l'unité (15) est configurée pour émettre un signal, en particulier lorsque la capacité d'utilisation résiduelle (18) ou la capacité d'utilisation résiduelle corrigée (118) est inférieure à un pourcentage prédéterminé de la capacité d'utilisation cible (21).

7. Engin de construction routière (1) selon l'une quelconque des revendications précédente**s, caractérisé en ce que** l'unité (15) est configurée pour transmettre la capacité d'utilisation résiduelle (18) ou la capacité d'utilisation résiduelle corrigée (118) à au moins un récepteur distant (23).

8. Engin de construction routière (1) selon l'une quelconque des revendications précédente**s, caractérisé en ce que** la détermination de la capacité d'utilisation résiduelle (18) est basée sur une température extérieure actuelle de l'engin de construction routière (1) et/ou sur une vitesse de déplacement actuelle de l'engin de construction routière (1).

9. Engin de construction routière (1) selon l'une quelconque des revendications précédente**s, caractérisé en ce que** le consommateur est un dispositif de chauffage (31) fonctionnant à l'électricité et/ou un groupe électro-hydraulique (32) fonctionnant à l'électricité et/ou un dispositif de transport longitudinal (30) fonctionnant à l'électricité et/ou un dispositif de transport transversal (33) fonctionnant à l'électricité et/ou un entraînement de châssis électrique (34) fonctionnant à l'électricité, de l'engin de construction routière.

10. Procédé de détermination et d'affichage d'une capacité d'utilisation résiduelle (18) d'au moins une source d'alimentation en énergie (17) reliée à au moins un consommateur électrique (16) utilisé au niveau d'un engin de construction routière (1), dans lequel l'engin de construction routière (1) est configuré sous la forme d'un finisseur routier (2) ou d'un alimentateur (24) destiné à un finisseur routier (2),
dans lequel la source d'alimentation en énergie (17) est une batterie (17a),
dans lequel l'engin de construction routière (1) comprend un poste de conduite (9, 28) au niveau duquel est agencée au moins une unité (15),
**caractérisé en ce que** l'unité (15) détermine et affiche, sous la forme d'une durée d'utilisation résiduelle (18a) et/ou d'une plage d'utilisation résiduelle (18b) restante pour le au moins un consommateur (16), une capacité d'utilisation résiduelle (18) sur la base d'un état de charge actuel détecté de la source d'alimentation en énergie (17), dans lequel une capacité d'utilisation cible (21) requise pour une phase de travail (20) planifiée au moyen du consommateur (16) est affichée au moyen de l'unité (15) sous la forme d'une durée d'utilisation cible (21a) et/ou d'une plage d'utilisation cible (21b).
